# EUROPÄISCHE PATENTANMELDUNG

(11) **EP 0 829 420 A2**
(43) Veröffentlichungstag der Anmeldung: **18.03.1998**
(21) Anmeldenummer: 97116024.7
(22) Anmeldetag: 15.09.1997
(51) Int. Cl.: B62D 49/06, B60B 35/10

(54) **Achsen-Vorrichtung**

(30) Priorität: 13.09.1996 DE 19637451
(71) Anmelder: Gerhard Krüger GmbH Maschinenfabrik, 87668 Rieden (DE)
(72) Erfinder: Eyerle, Anton, 87600 Kaufbeuren (DE)
(74) Vertreter: Kern, Ralf M., Dipl.-Ing.

(57) **Zusammenfassung**

Die Erfindung liegt in einer Achsen-Vorrichtung für Fahrzeuge, insbesondere Traktoren vor allem Kleintraktoren und einem Verfahren zu deren motorischer Handhabung, die eine axial ausschiebbare Fahrzeugachse aufweist.

## Beschreibung

Die Erfindung betrifft eine Achsen-Vorrichtung für Fahrzeuge und Traktoren, insbesondere für Kleintraktoren bzw. sogenannte Hoftraktoren, welche zwecks besserer Wendigkeit auch innerhalb von Stallungen sehr schmal konstruiert sind und zudem auch als Knicklader ausgeführt sein können und ein Verfahren zur motorischen Handhabung dieser Achsen-Vorrichtung.

Derartige Arbeitsfahrzeuge sind einerseits durch ihre schmale Spur stark kippgefährdet, z.B. bei schrägem Gelände (z.B. Hänge), vor allem aber besonders bei höherem Anheben von Lasten mit ihren hochfahrbaren Arbeitsarmen. Ähnliches gilt auch für größere Traktor-Arbeitsgeräte (auch Gabelstapler), zumal bei seitlicher Verlagerung hochgefahrener Lasten.

Aufgabe der Erfindung ist die Schaffung einer konstruktiv einfachen Achsen-Vorrichtung zur Ausstattung derartiger Traktoren bzw. Fahrzeuge, welche die vorgenannten Nachteile auf wirtschaftlich und konstruktiv einfachste sowie nicht störungsanfällige Weise vermeidet oder vermindert.

Demgemäß wird mit der Erfindung eine Achsen-Vorrichtung geschaffen, bei der die Fahrzeugachse zur Verbreiterung der Spurweite axial ausschiebbar ist, und zwar sowohl für nicht angetriebene Achsen als auch für angetriebene Achsen. Die erfindungsgemäße Achsen-Vorrichtung weist in konkreter Ausführungsform eine Fahrzeugachse mit mindestens zwei koaxial ineinander- bzw. auseinanderschiebbare Elemente auf, von denen das eine eine Hauptachse in einem am Fahrzeug befestigten Achsengehäuse und das andere eine Achsenverlängerung ist, welche jeweils hohl ausgebildet sind.

Diese Achsen-Vorrichtung kann als Kraftquelle zur axialen Relativbewegung der Elemente zueinander eine hydraulische, pneumatische, elektrische und auch eine mechanische Einrichtung aufweisen.

Bei hydraulisch oder pneumatisch betätigbarer Achsen-Vorrichtung ist für die axiale Rückstellung der Achse eine Achsenverlängerung als Hohlachse innerhalb von Lagern im äußeren Bereich des Achsengehäuses geführt und weist an ihrem inneren Ende einen nach radial auswärts abstehenden ringartigen Kolben auf, welcher in einem hydraulisch arbeitenden Zylinder gleitet, der jeweils endseitig über einen Einlaß und einen Auslaß mit einem hydraulischen bzw. pneumatischen System verbunden ist.

Für die axiale Auswärts-Verlagerung der Achsenverlängerung ist eine pneumatisch oder hydraulisch arbeitende Ausstell-Zylinderanordnung mit einem am fahrzeugseitigen Ende befindlichen Einlaß und einem aus dem zylindrischen Innenraum innerhalb einer Distanzführung der Innenseite des äußeren Bereichs des Achsengehäuses sowie dem Innenraum der nach außen mit einer Endplatte verschlossenen Hohlachse, dem ringartigen Kolben und dem endseitig mit der Begrenzung gegebenen Hubvolumen sowie mit einem Auslaß, wobei der Druckfluß durch den Einlaß und dem Auslaß je nach der Richtung der Axialverschiebung der Hohlachse umschaltbar ist.

Bei einer angetriebenen Achse ist eine in das Achsengehäuse axial hineinragende Antriebswelle über eine Kupplung mit einem Verlängerungsschaft verbunden, welcher mit einer Längsprofilierung, z.B. einer Längsverzahnung versehen ist, die in einer innerhalb der Hohlachse befestigten Verzahnungsbuchse über die Länge des Hubwegs formschlüssig eingreifend bewegbar ist.

Da jeder Arbeitstraktor ohnehin mit einem Öldrucksystem zum Hantieren seiner Arbeitsgeräte versehen ist, kann das erfindungsgemaße Achsenverlagerungssystem zur Veränderung der Spurbreite daran angeschlossen sein.

Möglich ist auch eine Einrichtung, mit der die Hohlachse an einer stelle zwischen dem eingefahrenen Zustand und dem maximalen Verlagerungshub fixierbar ist.

Vorzugsweise ist an der rechten bzw. linken Hälfte einer Fahrzeugachse eine starr mit einem Fahrzeug verbundene Lagerwand vorgesehen und an der Lagerwand zwei Teleskopachsen verschiebbar angeordnet, die an ihrem äußeren Ende durch eine starre Verbindung miteinander verbunden sind, wobei außen an der starren Verbindung zwischen den Teleskopachsen ein Flansch für die Felge des Fahrzeugrades angebracht ist. Durch diese insgesamt bevorzugte Ausführungsform ist ein größeres Verhältnis zwischen der breitesten Spur und der engsten Spur möglich und es werden Dichtungsprobleme zwischen dem Hubzylinder und der Achse vermieden.

Weiterhin vorzugsweise sind die Lagerwand und die starre Verbindung zwischen den Teleskopachsen durch einen Teleskopzylinder miteinander verbunden, wobei der Teleskopzylinder sich zwischen einer Teleskopachse und der Achse des Flansches für die Felge des Fahrzeugrades befindet und die beiden Teleskopachsen heraus- und hereinfährt.

Immer noch vorzugsweise befindet sich innen an der starren Verbindung zwischen den Teleskopachsen ein Radmotor, wobei die Achse des Radmotors mit der Achse des Flansches für die Felge des Fahrzeugrades zusammenfällt und der Radmotor den Flansch antreibt.

Bevorzugt ist der Radmotor ein hydraulischer Motor, der von einer verstellbaren Pumpe im Fahrzeug mit Drucköl versorgt wird, wobei alle Radmotoren des Fahrzeugs von derselben verstellbaren Pumpe mit Drucköl versorgt werden.

Weiterhin bevorzugt ist außen an der starren Verbindung zwischen den Teleskopachsen ein Planetengetriebe angebracht, wobei die Achse des Planetengetriebes mit den zusammenfallenden Achsen des Flansches für die Felge des Fahrzeugrades und des Radmotors zusammenfällt, der Radmotor das Planetengetriebe antreibt und das Planetengetriebe den Flansch antreibt.

Immer noch bevorzugt sind von der Lagerwand Ausführungsrohre für die Teleskopachsen ins Fahrzeuginnere im rechten Winkel gerichtet, wobei die Führungsrohre mit der Lagerwand fest verbunden sind und die Lagerwand an den Stellen der Öffnungen der Führungsrohre Öffnungen aufweist.

Vorzugsweise sind die Führungsrohre für die Teleskopachsen mit der Lagerwand verschweißt.

Weiterhin vorzugsweise weisen die Führungsrohre für die Teleskopachsen in ihrem Inneren Gleitbuchsen auf, in denen die Teleskopachsen gleiten.

Immer noch vorzugsweise sind die Gleitbuchsen aus Polyamid.

Zur vereinfachten Handhabe der Ausstellung bzw. Rückstellung der Fahrzeugachse umfaßt die Erfindung auch ein Verfahren, das dadurch gekennzeichnet ist, daß ein Anheben der Fahrzeugräder eine Achse mittels Hochdrücken bzw. -koppen der betroffenen Fahrzeugachse durch die hydraulisch betätigbaren Arbeitsarme des Fahrzeugs erfolgt.

Die Erfindung ist nachstehend in zwei Ausführungsbeispielen näher erläutert. Es zeigt
Figur 1 einen Längsschnitt durch eine erfindungsgemäße Vorrichtung zur Ausstattung von Traktoren bzw. Fahrzeugen im Zustand eingefahrener Achsenverlängerung einer ersten Ausführungsform;
Figur 2 einen Längsschnitt gemäß Figur 1, jedoch mit ausgefahrener Stellung der Achsverlängerung; und

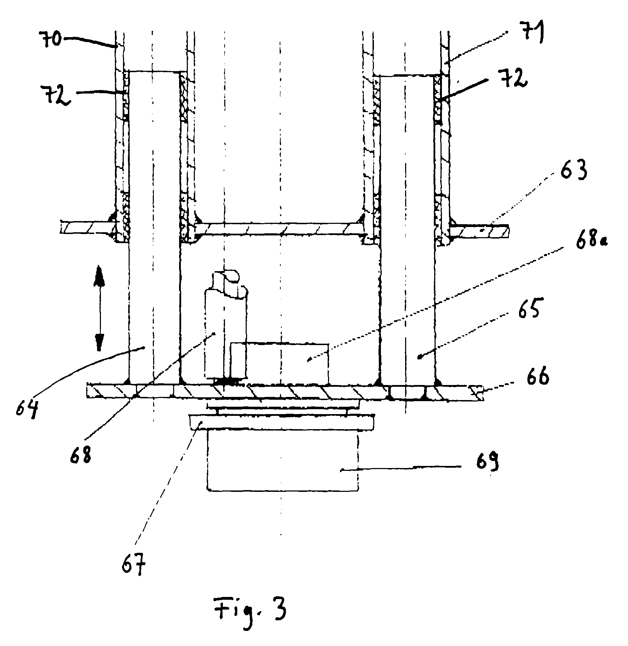

Figur 3 einen Längsschnitt durch eine Achsen-Vorrichtung nach einer zweiten Ausführungsform.

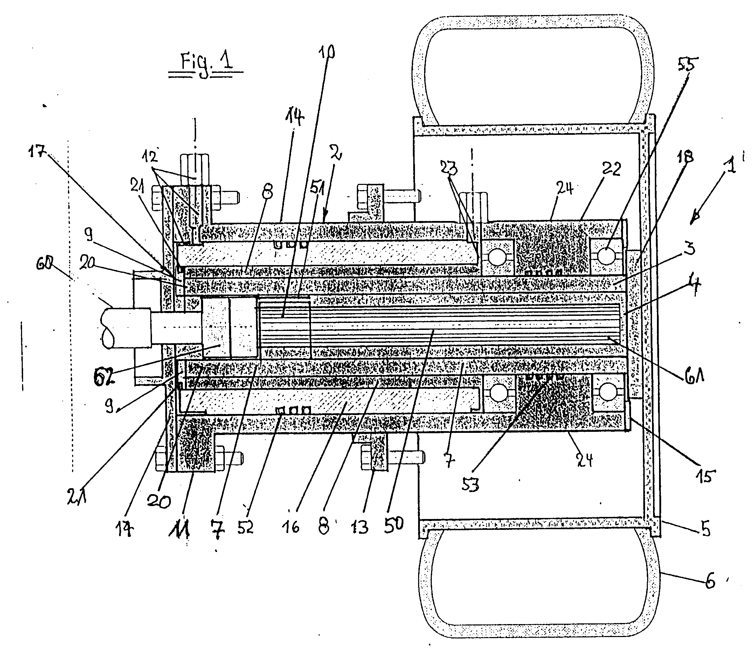

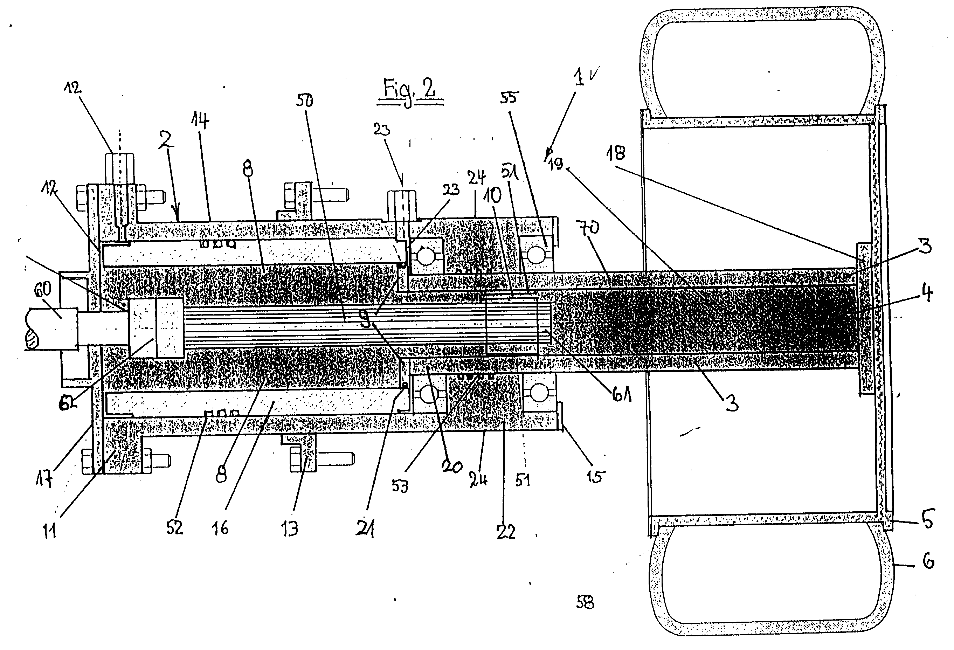

Die gemäß Figur 1 und 2 dargestellte Achsen-Vorrichtung 1 weist ein Achsengehäuse 2 auf, welches mit einem Flansch 11 sowie einem Flansch 13 am Tragrahmen bzw. der Achsaufhängung oder Differential eines Traktors anzubringen ist. Die Achsen-Vorrichtung 1 kann sowohl für eine Achse mit Antrieb bzw. Antriebswelle als auch für eine Achse ohne Antrieb ausgebildet sein.

Die vom Achsengehäuse 2 getragene Achse weist zwei koaxial ineinander- bzw. auseinanderschiebbare Elemente auf, nämlich eine Hauptachse 14, die vom Achsengehäuse 2 gebildet wird, in dessen außenseitigen Ende bzw. äußeren Längenbereich 24 zwei auf axialen Abstand voneinander angeordnete Lager 55, gestützt von axialen Abschlußringen 15, vorgesehen sind, von denen eine axial verlagerbare Achsenverlängerung 3 geführt wird.

Am außenseitigen Ende 4 der Achsenverlängerung 3 in Form einer schubrohrartigen Hohlachse 7 ist diese mit einer Endplatte 18 verschlossen, an der eine Felge 5 mit einem Reifen 6 eines Fahrzeugrads angebracht ist.

Am inneren Ende 20 der Hohlachse 7 ist ein ringartiger Kolben 9 angeordnet, welcher von der Wandung der Hohlwelle 7 radial auswärts absteht und mittels Dichtringen 21 an der inneren Zylinderwandung einer im Achsengehäuse 2 angeordneten Distanzführung 16 längs einer, sich über die Länge des maximalen Ausstellhubs der Hohlachse 7 bestimmenden Distanz erstreckt.

Die Distanzführung 16 ist mittels Dichtungen 52 gegen die innere Wandung des Achsengheäuses abgedichtet und bildet einen für beide Hubwege gemeinsamen Teil des gesamten Hubvolumens 16.

Vom dem ringartigen Kolben 9, der Distanzführung 16, dem äußeren Bereich 24 und des Achsengehäuses 2 wird der hydraulisch arbeitende Zylinder 8 gebildet, welcher über einen Einlaß 23 mit einem hydraulischen (oder pneumatischen) System verbunden ist. In das Achsengehäuse 2 eingefahrene Stellung der Achsenverlängerung 3 bzw. der Hohlachse 7 stößt das innere Ende 20 der Hohlachse 7 von innen an die stirnseitige Begrenzung 17 des Achsengehäuses 2 an und verschließt zugleich die Zuführung eines Auslasses 12, so daß die eingefahrene Position der Achsenverlängerung 3 gesichert ist.

Beim Verlagern der Achsenverlängerung 3 bzw. der Hohlachse 7 in ihre ausgefahrene Stellung gemäß Figur 2 wird der hydraulische Druck auf den Einlaß 23 entlastet und über den Auslaß 12 ausgeübt, wodurch mittels der auf dem ringartigen Kolben 9 einwirkenden Druckumkehr auf seiner Innen- und Außenseite der Kolben 9 mit der Hohlachse 7 nach außen gedrängt wird, und zwar bis zum Anschlag gegen den äußeren Bereich 24 des Achsengehäuses 2. Dabei wird zugleich der Einlaß 23 von dem ringartigen Kolben 9 verschlossen und die ausgefahrene Stellung zusätzlich gesichert.

Der maximale Arbeitshub mit seinem Hubvolumen für die Achsenverlängerung 3 ist also durch die Distanz zwischen der Innenseite der stirnseitigen Begrenzung 17 des Achsengehäuses und der inneren Begrenzung des Gehäuses 22 für die Lager 55 sowie innerhalb der Distanzführung, den Kolbenringen 9 und dem Innenraum der Hohlachse 7 bis zur Endplatte 18 gegeben. Durch Ventile im Hydraulikkreislauf ist es auch möglich, eine Zwischenstellung des maximalen Arbeitshubs einzustellen.

Beim Ausfahren der Achsenverlängeurng wird die durch den Auslaß 12 im Achsengehäuse 2 gedrückte Hydraulik-Flüssigkeit in den innerhalb der Distanzführung 16, den mit der Verdrängung der Hohlachse 7 freiwerdenden Raum, dem ringartigen Kolben 9 und dem übrigen Raum im Inneren des Achsengehäuses 2 ausgefüllt und auch von Innen gegen die Endplatte 18 gedrängt. Dichtungen 53 dichten die Hohlachse 7 nach Außen gegen das Gehäuse 22 ab.

Damit ist eine hydraulische Anordnung geschaffen, die für eine Verlagerung in zwei unterschiedliche Stellungen der Achsenverlängerung 3 im wesentlichen von ohnehin benötigten Konstruktionselementen Gebrauch macht und damit wirtschaftlich günstig aufgebaut ist.

Bei einer Achsen-Vorrichtung 1 mit angetriebener Achse wie in die Figur 1 und 2 eingezeichnet ist, ist radial innerhalb der Hohlachse 7 an einer vom Differential ausgehenden Antriebswelle 60 mittels einer Kupplung 62 ein Verlängerungsschaft 61 vorgesehen, der etwa über die Länge der Hohlachse 7 zentral in das Achsengehäuse 2 hineinragt. Der Verlängerungsschaft 61 besitzt eine durchgehende Längsverzahnung 50, auf der eine in ihrer Innenöffnung entsprechend mit dem Profil des Verlängerungsschafts 61 formschlüssig verbundene Verzahnungsbuchse 10 längs des Hubwegs zusammen mit der Hohlachse 7 verlagerbar ist, deren Innenwandung z.B. mittels einer Keilbefestigung 51 im Sinne einer Keilnabe fest verbunden ist, so daß sie zusammen mit der Hohlachse 7 aus- und ein-verlagerbar ist.

Das formschlüssig ineinandergreifende Profil der Verzahnungsbuchse 10 und des Verlängerungsschafts 61 kann jede Art von Form haben, beispielsweise als Vierkantprofil.

In einem noch bevorzugteren Ausführungsbeispiel ist am Fahrzeugrahmen einer Achshälfte eine Lagerwand 63 vorgesehen, an die im rechten Winkel ins Fahrzeuginnere weisend Führungsrohre 70, 71 angebracht sind, und zwar so, daß die Öffnungen der Führungsrohre 70, 71 mit Öffnungen in der Lagerwand 63 zusammenfallen. Die Führungsrohre 70,71 sind mit der Lagerwand verschweißt. Im Inneren der Führungsrohre befinden sich Gleitbuchsen 72 aus Polyamid in denen Teleskopachsen 64, 65 gleiten. Die Teleskopachsen 64, 65 befinden sich rechts bzw. links von einem Flansch 67 für die Felge 5 des Fahrzeugrades, der außen an einer starren Verbindung 66 zwischen den beiden Teleskopachsen 64, 65 angebracht ist. Gleich mit dem Flansch befindet sich im Inneren der starren Verbindung zwischen den Teleskopachsen ein hydraulischer Radmotor 68a, der von einer verstellbaren Pumpe im Fahrzeug angetrieben wird, wobei das Drucköl für die hydraulischen Radmotoren 68a des Fahrzeuges alle von derselben verstellbaren Pumpe stammen.

Ebenfalls achsgleich mit der Achse des Radmotors 68a und des Flansches 67 befindet sich außen an der starren Verbindung zwischen den Teleskopachsen 64, 65 ein Planetengetriebe 69, wobei das Planetengetriebe 69 vom Radmotor 68a angetrieben wird und das Planetengetriebe 69 den Flansch 67 für die Felge 5 des Rades antreibt. Zwischen einer Teleskopachse 64, 65 und der Achse von Radmotor 68a, Flansch 67 und Planetengetriebe 69 befindet sich ein Teleskopzylinder 68, der an seiner einen Seite mit der starren Verbindung zwischen den Teleskopachsen 64, 65 und an seinem anderen Ende mit der Lagerwand 63 verbunden ist. Dieser Teleskopzylinder 68 zieht die Teleskopachsen aus der Lagerwand heraus und schiebt sie wieder hinein.

Zur Handhabung der Achsenverlängerung bedarf es auch keinerlei gesonderter Hilfsgeräte. Bei der Verstellung der Vorderachsen werden die Arbeitsarme z.B. mit einer Ladeschaufel gegen den Boden gedrängt, so daß sich die Vorderräder anheben oder unter z.B. eine Rampe gedrängt, so daß sich die Hinterachsen vom Boden abheben.

Der Schutzumfang schließt auch einfache Anhänger ein, welche zwecks Einsatz zwischen engeren Erntereihen schmaler als im Straßenverkehr sein müssen und dann auf der Straße spurverbreitert werden, wozu das Hydrauliksystem des Zugfahrzeugs verwendet werden kann.

### Bezugszeichenliste

- 1: Achsenvorrichtung
- 2: Achsengehäuse
- 3: Achsenverlängerung
- 4: äußeres Ende von 3
- 5: Felge
- 6: Reifen
- 7: Hohlachse
- 8: hydraulisch arbeitender Zylinder
- 9: ringartige Kolben
- 10: Verzahnungsbuchse
- 11: Flansch zum Differential bzw. zur Achsenaufhängung
- 12: Auslaß
- 13: Flansch zum Rahmen
- 14: Hauptachse
- 15: axiale Abschlußringe
- 16: Distanzführung
- 17: stirnseitige Begrenzung des Achsengeh.
- 18: Endplatte
- 19: Hubvolumen
- 20: inneres Ende der Hohlachse 7
- 21: Dichtringe
- 22: Gehäuse für die Lager 55
- 23: Einlaß
- 24: äußerer Bereich des Achsengehäuses
- 50: Längsverzahnung
- 51: Keilbefestigung
- 52: Dichtungen
- 53: Dichtungen
- 55: Lager für Hohlachse
- 60: Antriebswelle vom Differential
- 61: Verlängerungsschaft
- 62: Kupplung
- 63: Lagerwand
- 64: Teleskopachse
- 65: Teleskopachse
- 66: starre Verbindung
- 67: Flansch
- 68: Teleskopzylinder
- 68a: Radmotor
- 69: Planetengetriebe
- 70: Führungsrohr
- 71: Führungsrohr
- 72: Gleitbuchsen

## Patentansprüche

1. Achsen-Vorrichtung für insbesondere Traktoren, auch Fahrzeuge, welche zur Verbreiterung der Spurweite eine axial ausschiebbare Fahrzeugachse aufweist.

2. Achsen-Vorrichtung nach Anspruch 1, deren Fahrzeugachse mit mindestens zwei koaxial ineinander- bzw. auseinanderschiebbare Elemente aufweist, von denen das eine eine Hauptachse (14) in einem am Fahrzeug befestigten Achsengehäuse (2) und das andere eine Achsenverlängerung (3) ist, welche jeweils hohl ausgebildet sind.

3. Achsen-Vorrichtung nach Anspruch 1 oder 2, dadurch gekennzeichnet, daß zur axialen Relativbewegung der Elemente zueinander eine hydraulische Einrichtung vorgesehen ist.

4. Achsen-Vorrichtung nach Anspruch 1 oder 2, dadurch gekennzeichnet, daß zur axialen Relativbewegung der Elemente zueinander eine pneumatische Einrichtung vorgesehen ist.

5. Achsen-Vorrichtung nach Anspruch 1 oder 2, dadurch gekennzeichnet, daß zur axialen Relativbewegung der Elemente zueinander eine elektrische Antriebseinrichtung vorgesehen ist.

6. Achsen-Vorrichtung nach einem der Ansprüche 1 bis 5, dadurch gekennzeichnet, daß die Achsenverlängerung (3) als Hohlachse (7) innerhalb von Lagern (55) im äußeren Bereich (24) des Achsengehäuses (2) geführt ist und an ihrem inneren Ende (20) einen nach radial auswärts abstehenden ringartigen Kolben (9) aufweist, welcher in einem von einer Distanzführung (16) gebildeten hydraulisch arbeitenden Zylinder (8) gleitet, der jeweils endseitig über einen Einlaß (23) und einen Auslaß (12) mit einem hydraulischen bzw. pneumatischen System verbunden ist.

7. Achsen-Vorrichtung nach einem der Ansprüche 1 bis 6, gekennzeichnet aus einer pneumatisch oder hydraulisch arbeitenden Ausstell-Zylinderanordnung mit einem am fahrzeugseitigen Ende befindlichen Einlaß (23) und einem aus dem zylindrischen Innenraum innerhalb einer Distanzführung (16), der Innenseite des äußeren Bereichs (24) des Achsengehäuses (2) sowie dem Innenraum der nach außen mit einer Endplatte (18) verschlossenen Hohlachse (9), dem ringartigen Kolben (9) und dem endseitig mit der Begrenzung (17) gegebenen Hubvolumen (19) sowie mit einem Auslaß (12), wobei der Druckfluß durch den Einlaß und den Auslaß je nach der Richtung der Axialverschiebung der Hohlachse (7) umschaltbar ist.

8. Achsen-Vorrichtung nach einem der Ansprüche 1 bis 7, dadurch gekennzeichent, daß eine in das Achsengehäuse (2) axial hineinragende Antriebswelle (60) über eine Kupplung (62) mit einem Verlängerungsschaft (61) verbunden ist, welcher mit einer Längsprofilierung, z.B. einer Längsverzahnung (50) versehen ist, die in einer innerhalb der Hohlachse (7) befestigten Verzahnungsbuchse (10) über die Länge des Hubwegs formschlüssig eingreifend bewegbar ist.

9. Achsen-Vorrichtung nach Anspruch 1, dadurch gekennzeichnet, daß an der rechten bzw. linken Hälfte einer Fahrzeugachse eine starr mit dem Fahrzeug verbundene Lagerwand (63) vorgesehen ist und an der Lagerwand (63) zwei Teleskopachsen (64, 65) verschiebbar angeordnet sind, die an ihrem äußeren Ende durch eine starre Verbindung (66) miteinander verbunden sind, wobei außen an der starren Verbindung (66) zwischen den Teleskopachsen (64, 65) ein Flansch (67) für die Felge (5) des Fahrzeugrads angebracht ist.

10. Achsen-Vorrichtung nach Anspruch 9, dadurch gekennzeichnet, daß die Lagerwand (63) und die starre Verbindung (66) zwischen den Teleskopachsen (64, 65) durch einen Teleskopzylinder (68) miteinander verbunden sind, wobei der Teleskopzylinder (68) sich zwischen einer Teleskopachse (64, 65) und der Achse des Flansches (67) für die Felge (5) des Fahrzeugrades befindet und die beiden Teleskopachsen (64, 65) heraus- und hereinfährt.

11. Achsen-Vorrichtung nach Anspruch 10, dadurch gekennzeichnet, daß innen an der starren Verbindung (66) zwischen den Teleskopachsen (64, 65) ein Radmotor (68a) angebracht ist, wobei die Achse des Radmotors (68a) mit der Achse des Flansches (67) für die Felge (5) des Fahrzeugrades zusammenfällt und der Radmotor (68a) den Flansch (67) antreibt.

12. Achsen-Vorrichtung nach Anspruch 11, dadurch gekennzeichnet, daß der Radmotor (68a) ein hydraulischer Motor ist, der von einer verstellbaren Pumpe im Fahrzeug mit Drucköl versorgt wird, wobei alle Radmotoren (68a) des Fahrzeugs von derselben verstellbaren Pumpe mit Drucköl versorgt werden.

13. Achsen-Vorrichtung nach Anspruch 11 oder 12, dadurch gekennzeichnet, daß außen an der starren Verbindung (66) zwischen den Teleskopachsen (64, 65) ein Planetengetriebe (69) angebracht ist, wobei die Achse des Planetengetriebes (69) mit den zusammenfallenden Achsen des Flansches (67) für die Felge (5) des Fahrzeugrades und des Radmotors (68a) zusammenfällt, der Radmotor (68a) das Planetengetriebe (69) antreibt und das Planetengetriebe (69) den Flansch (67) antreibt.

14. Achsen-Vorrichtung nach einem der Ansprüche 9 bis 13, dadurch gekennzeichnet, daß von der Lagerwand (63) Ausführungsrohre (70, 71) für die Teleskopachsen (64, 65) ins Fahrzeuginnere im rechten Winkel gerichtet sind, wobei die Führungsrohre mit der Lagerwand (63) fest verbunden sind und die Lagerwand (63) an den Stellen der Öffnungen der Führungsrohre (70, 71) Öffnungen aufweist.

15. Achsen-Vorrichtung nach Anspruch 14, dadurch gekennzeichnet, daß die Führungsrohre (70, 71) für die Teleskopachsen (64, 65) mit der Lagerwand (63) verschweißt sind.

16. Achsen-Vorrichtung nach Anspruch 14 oder 15, dadurch gekennzeichnet, daß die Führungsrohre (70, 71) für die Teleskopachsen (64, 65) in ihrem Inneren Gleitbuchsen (72) aufweisen, in denen die Teleskopachsen (64, 65) gleiten.

17. Achsen-Vorrichtung nach Anspruch 16, dadurch gekennzeichnet, daß die Gleitbuchsen (72) aus Polyamid sind.

18. Verfahren zum Durchführen der Achsverlängerung oder -verkürzung für eine Achsen-Vorrichtung nach Anspruch 1 bis 17, dadurch gekennzeichnet, daß ein Anheben der Fahrzeugräder einer Achse mittels Hochdrücken bzw. -koppen der betroffenen Fahrzeugachse durch hydraulisch betätigbare Arbeitsarme des Fahrzeugs erfolgt.
